# EUROPEAN PATENT APPLICATION

(11) **EP 2 899 712 A1**
(43) Date of publication of application: **29.07.2015**
(21) Application number: 15151945.1
(22) Date of filing: 21.01.2015
(51) Int. Cl.: G09B 29/10, G01C 21/36

(54) **Map information display device and map information display method**

(30) Priority: 28.01.2014 JP 2014013025
(71) Applicant: Alpine Electronics, Inc., Tokyo (JP)
(72) Inventor: Obinata, Ayumi, Iwaki, Fukushima 970-1192 (JP)
(74) Representative: Klunker . Schmitt-Nilson . Hirsch

(57) **Abstract**

To provide a "map information display device and map information display method" that can reduce the effort of searching for a desired facility among facility marks displayed on a map.

When displaying facility marks on a map, the facility marks are displayed on the map upon adjusting the height from the ground of each facility mark according to a level expressed by attribute information included in facility data. Thereby, even without selecting a facility mark displayed on the map to display detailed information thereof, a user can confirm and compare the level expressed by the attribute information regarding each facility based on the difference in height of each facility mark. Further, even if there are a plurality of facility marks displayed at the same location or nearby locations on the map, overlap of the facility marks can be avoided by changing the height of each facility mark, and thus the user can easily select a desired facility mark to confirm the detailed information thereof.

## Description

The present invention relates to a map information display device and a map information display method, and is particularly suitable for use in a map information display device configured to display information regarding facilities that have been searched on a map.

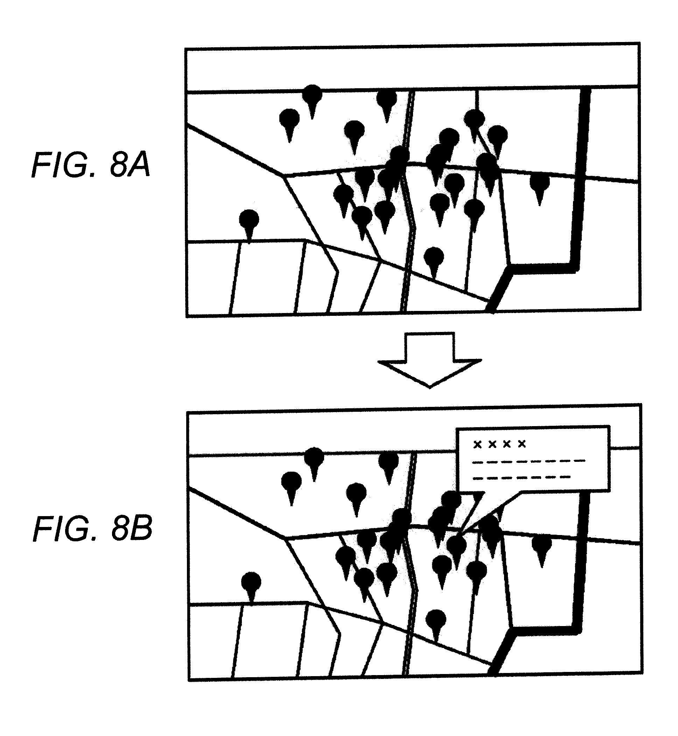

A conventional technology for displaying information regarding facilities that have been searched by inputting keywords on a map has been proposed. For example, if an AND search is performed using the two keywords "Iwaki Station" and "hotel", a plurality of hotels in the vicinity of Iwaki Station will be searched. As shown in FIG. 8A, a map of Iwaki Station and its surroundings is displayed, and predetermined facility marks are displayed at locations on the map at which the searched hotels exist. If a user selects a desired facility mark, information of the hotel corresponding to the selected facility mark (such as the address, telephone number, link to a details page, number of reviews or applause ("likes")) will be displayed in a pop-up fashion as shown in FIG. 8B.

However, in a state in which facility marks are displayed on a map, although the location of a facility can be understood, other information about the facility cannot be confirmed unless the facility mark is selected to display such information on a pop-up screen. Thus, in order for a user to find the facility that he/she is looking for, the user had to select each facility mark one by one to display its information on a pop-up screen and confirm and compare the content thereof, and this has been extremely troublesome. In particular, there has been a problem in that when the number of searched facilities is large, it can take a huge amount of time to find the desired facility.

Further, when the number of searched facilities is large, a large amount of facility marks are displayed on the map, and there may be some facility marks that are displayed adjacent to or overlapping each other. In this case, there has been a problem in that it is difficult for the user to carry out the operation of selecting a desired facility mark. In particular, when a map of a wide area is displayed, the plurality of facility marks often overlap each other. Therefore, in order to select a desired facility mark, the user had to perform a troublesome operation of reducing the scale to display a map of a narrow area and then making a selection upon eliminating any overlap between the facility marks.

In order to realize a facility symbol display capable of more accurate information transmission, a conventional technology has been proposed for changing the display size of facility icons based on additional information classified in terms of facility scale, number of years since opening, ratings by third parties, and prices offered (for example, refer to Patent Literature 1). In another proposed technology, facility pin marks are displayed with different surface areas or densities depending on the level of popularity of each facility (for example, refer to Patent Literature 2).

### Citation List

### Patent Literatures

Patent Literature 1: JP 2005-308543 A
Patent Literature 2: JP 2013-61434 A

According to the technology of Patent Literature 1 mentioned above, even without selecting a facility icon displayed on the map to further display detailed information thereof, it is possible to confirm and compare the information of facility scale, number of years since opening, ratings by third parties, and prices offered based on the difference in the sizes of the facility icons. However, the problem in which the facility icons are displayed overlapping each other when the number of facility icons to be displayed is large cannot be overcome.

Patent Literature 1 discloses that if a map of a wide area is displayed, overlap can be avoided by displaying only facility icons of a specific size rather than displaying all of the facility icons (refer to Paragraph [0043]). However, in this case, only the facility icons of a specific size are displayed, and thus there has been a problem in that information regarding facilities whose facility icon is not displayed cannot be confirmed and compared. Further, there has also been a problem in that a user cannot select his/her desired facility if this facility is among the facilities whose facility icons are not displayed.

Meanwhile, according to the technology of Patent Literature 2 mentioned above, even without selecting a facility pin mark displayed on the map to further display detailed information thereof, the level of popularity of each facility can be confirmed and compared based on the difference in the surface areas or densities of the facility pin marks. However, in this technology of Patent Literature 2 as well, the problem in which the facility pin marks are displayed overlapping each other when the number of facility pin marks to be displayed is large cannot be overcome.

An object of the present invention is to enable a user to confirm and compare information regarding a plurality of facilities in the state in which a plurality of facility marks are displayed on a map, and to reduce the effort of searching for a desired facility among the facility marks displayed on the map by avoiding overlap between the facility marks as much as possible to enable a user to easily select a desired facility mark.

The invention relates to a map information display device and a method according to the independent claims. Particularly, a map visualized from a virtual viewpoint located above the ground is displayed, and when displaying facility marks at their corresponding locations on the map, each facility mark is displayed upon adjusting its height from the ground according to a level expressed by attribute information included in facility data.

According to the present invention, even without selecting a facility mark displayed on the map to display detailed information thereof, the user can confirm and compare the level expressed by the attribute information regarding each facility based on the difference in height of each facility mark in a state in which a plurality of the facility marks are displayed on the map. Further, according to the present invention, even if there are a plurality of facility marks displayed at the same location or nearby locations on the map, the height of each facility mark that is displayed will change as long as the level expressed by the attribute information regarding each facility is different, and thus overlap of the facility marks can be avoided. Therefore, the user can easily select a desired facility mark to confirm the detailed information thereof. Thereby, the effort required of the user to search for a desired facility among the facility marks displayed on the map can be greatly reduced.

### Brief Description of Drawings

FIG. 1 is a block diagram illustrating a functional structure example of a map information display device according to an embodiment of the present invention.
FIG. 2 is a view illustrating an example of map information (a map and facility marks) displayed by a display control unit of the embodiment.
FIG. 3 is a view illustrating an example of map information (a map and facility marks) displayed by a display control unit of the embodiment.
FIG. 4 is a view illustrating an example of map information (a map and facility marks) displayed by a display control unit of the embodiment.
FIG. 5 is a view illustrating an example of map information (a map and facility marks) displayed by a display control unit of the embodiment.
FIG. 6 is a flow chart illustrating an example of the operation of a map information display device 10 according to the embodiment.
FIG. 7 is a block diagram illustrating a modified embodiment of the map information display device according to the embodiment.
FIG. 8 is a view illustrating a conventional example of a display of map information (a map and facility marks).

### Description of Embodiments

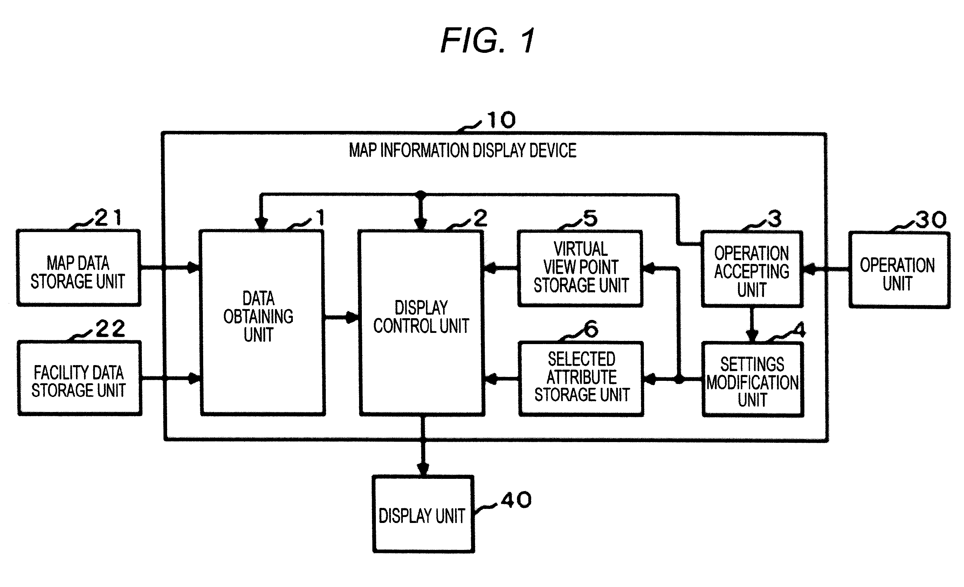

An embodiment of the present invention will now be explained below based on the drawings. FIG. 1 is a block diagram illustrating a functional structure example of a map information display device 10 according to this embodiment. As shown in FIG. 1, the map information display device 10 according to this embodiment includes the following in its functional structure: a data obtaining unit 1, a display control unit 2, an operation accepting unit 3, a settings modification unit 4, a virtual viewpoint storage unit 5, and a selected attribute storage unit 6. Also, the map information display device 10 is connected to a map data storage unit 21, a facility data storage unit 22, an operation unit 30, and a display unit 40.

The functional blocks 1 to 4 can be constituted by any of hardware, DSP (Digital Signal Processor), and software. For example, if constituted by software, the functional blocks 1 to 4 are actually configured to include CPU, RAM, ROM, and the like of a computer, and are realized upon operation by a program stored in a storage medium such as RAM, ROM, a hard disk, a semiconductor memory, and the like.

The map data storage unit 21 stores map data. The map data stored in the map data storage unit 21 should include at least location information capable of specifying the locations of various facilities. For example, the map data can be map data used in a navigation device that searches for routes and guides the travel of a vehicle, or map data that can perform map searches on the internet such as so-called Google Maps ("Google" is a registered trademark).

For example, if the map information display device 10 is installed in a navigation device, the map data is map data that is used in route searching and travel guidance. In this case, the map data storage unit 21 can be built into the navigation device, or installed separately from the navigation device as an external storage device, or equipped in a server device that can connect to the internet.

On the other hand, if the map information display device 10 is installed in a terminal such as a personal computer, smartphone, tablet, or the like, the map data is map data that can perform map searches on the internet. The map data does not necessarily have to be capable of performing route searches and travel guidance, but it can be capable of performing these. In this case, the map data storage unit 21 is equipped in a server device that can connect to the internet.

The facility data storage unit 22 stores facility data regarding various facilities. The facility data stored in the facility data storage unit 22 includes location information of a facility on a map represented by the map data stored in the map data storage unit 21, and various attribute information regarding the facility. The attribute information includes, for example, a facility genre, address, telephone number, facility usage fee, available time, link to a details page, reviews or applause ("likes"), ratings of the facility by a third party, and the like. The location information and attribute information of a facility is used as search information when a user searches for a desired facility. Further, the location information and attribute information of a facility is also used when displaying a facility mark representing the location of a searched facility or detailed information on a map.

Similar to the map data storage unit 21, the facility data storage unit 22 can be built into a navigation device, or installed separately from the navigation device as an external storage device, or equipped in a server device that can connect to the internet.

In the above-described example, the map data and the facility data were divided and stored respectively in the map data storage unit 21 and the facility data storage unit 22. However, the map data and the facility data can be stored integrally in a single storage unit. A data structure in which the facility data is included within the map data is also possible.

The operation accepting unit 3 accepts an operation performed on the operation unit 30 by the user. The operation unit 30 is, for example, a touch panel. Alternatively, the operation unit 30 can be an input device such as a keyboard or a mouse. Using the operation unit 30, the user can perform an operation for searching for a desired facility by inputting a keyword, and the user can perform an operation for controlling a display of map information (including the facility marks to be explained below) on the display unit 40.

The data obtaining unit 1 obtains the map data stored in the map data storage unit 21 and the facility data stored in the facility data storage unit 22. Specifically, the data obtaining unit 1 executes a search of the map data storage unit 21 and the facility data storage unit 22 based on a keyword that is input in accordance with an operation on the operation unit 30 by the user, and obtains facility data that matches the keyword and map data in a predetermined range.

For example, when setting a destination in a navigation device, the data obtaining unit 1 sets a facility genre such as hotel or convenience store as a keyword in accordance with an operation by the user, and searches for facilities in the vicinity of the vehicle location. As results of this facilities search, the obtaining unit 1 obtains map data in a predetermined range in the vicinity of the vehicle location from the map data storage unit 21 and obtains facility data regarding facilities in the corresponding genre that are located within the predetermined range from the facility data storage unit 22.

Further, for example, when searching for a desired facility by connecting from a terminal to a server over the internet, the data obtaining unit 1 sets one or more keywords such as "Iwaki Station" and "hotel" in accordance with an operation by the user, and searches for facilities that match these keywords. As results of this facilities search, the data obtaining unit 1 obtains map data in a predetermined range in the vicinity of Iwaki Station from the map data storage unit 21 and obtains facility data regarding hotels located within the predetermined range from the facility data storage unit 22.

The content of the facilities searches described above are merely one example, and the present invention is not limited thereto. As long as a plurality of facility data are extracted as search results, any search method can be utilized. Also, the method of obtaining data is not necessarily limited to obtaining data by a keyword search. For example, data can be collected by a search in which search conditions that differ from keywords are set. Alternatively, a predetermined range on the map can be set in accordance with an operation by the user to obtain map data in this predetermined range and facility data regarding facilities included in the predetermined range.

The display control unit 2 displays a map visualized from a virtual viewpoint located above the ground on the display unit 40 based on the map data obtained by the data obtaining unit 1 and displays facility marks that represent the existence of facilities at their corresponding locations on the map based on the location information that is included in both the map data and the facility data obtained by the data obtaining unit 1. At this time, the display control unit 2 displays the facility marks upon adjusting the height from the ground of each facility mark according to a level expressed by the attribute information included in the facility data.

The attribute information which serves as a reference for adjusting the height of each facility mark is one of a rating of the facility, a number of reviews about the facility, or a facility usage fee. The rating of the facility can be, for example, an average value of n-level ratings or point-based ratings evaluated by one or more users who have actually utilized the facility. Alternatively, a value of an n-level rating or point-based rating evaluated by an unbiased third party based on an objective rating standard can be used as the rating for the facility.

In the present embodiment, pin marks having a head part of a predetermined shape (for example, a circle or sphere) on top of a leg part of a predetermined shape (for example, a long, thin rod) that extends from the ground on the map are used for the facility marks. The display control unit 2 expresses the difference in height of each pin mark by at least the length of the leg part. Further, the difference in height of each pin mark can also be expressed by the length of the leg part and the size of the head part.

In the present embodiment, as the pattern of the virtual viewpoint, the map information can be displayed upon selecting one of a state when viewed from diagonally upwards, a state when viewed laterally, or a state when viewed from directly above. The settings modification unit 4 stores information regarding the virtual viewpoint that has been set in the virtual viewpoint storage unit 5 in accordance with an operation on the operation unit 30 by the user that has been accepted by the operation accepting unit 3. The display control unit 2 displays the map information in accordance with the virtual viewpoint information stored in the virtual viewpoint storage unit 5. Information regarding a virtual viewpoint by one of the patterns is stored as an initial state in the virtual viewpoint storage unit 5.

Further, in the present embodiment, the attribute information which serves as a reference for adjusting the height of each facility pin mark can be arbitrarily selected from the rating of the facility, the number of reviews about the facility, or the facility usage fee. The settings modification unit 4 stores the attribute information that has been set in the selected attribute storage unit 6 in accordance with an operation on the operation unit 30 by the user that has been accepted by the operation accepting unit 3. One type of attribute information is stored as an initial state in the selected attribute storage unit 6.

The display control unit 2 displays each facility mark upon adjusting its height according to a level expressed by the attribute information that is stored in the selected attribute storage unit 6. For example, if a rating of the facility is selected as the attribute information, the display control unit 2 displays the facility pin marks upon adjusting them such that the height of the facility pin mark increases as the rating value becomes higher. Further, if the number of reviews about the facility is selected, the display control unit 2 displays the facility pin marks upon adjusting them such that the height of the facility pin mark increases as the number of reviews becomes higher. In addition, if the facility usage fee is selected, the display control unit 2 displays the facility pin marks upon adjusting them such that the height of the facility pin mark increases as the facility usage fee becomes cheaper.

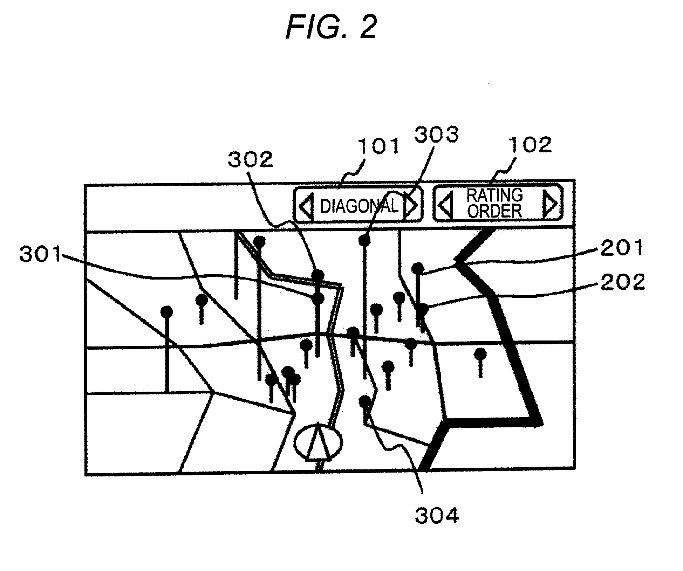

FIGS. 2 to 4 are examples of map information (including facility marks) displayed on the display unit 40 by the display control unit 2. Herein, FIGS. 2 to 4 illustrate examples in which facility pin marks regarding facilities that belong to a desired genre designated by an operation on the operation unit 30 by the user are displayed on a map of the vicinity of the location at which the vehicle is currently located when the map information display device 10 is installed in a navigation device.

A virtual viewpoint can be selected from one of diagonal, lateral, or directly upwards by operating a virtual viewpoint selection button 101. Also, one attribute information among the rating of the facility, the number of reviews about the facility, or the facility usage fee can be selected by operating an attribute information selection button 102. In all of FIGS. 2 to 4, the facility pin marks are displayed in a state in which the rating of the facility is selected.

FIG. 2 illustrates a state in which the virtual viewpoint is set to a location at a predetermined angle in the air behind the vehicle's location, and a map when looking diagonally downward from the virtual viewpoint in a form visualizing the direction of the vehicle's location (direction of travel of the vehicle) is displayed. Further, a plurality of facility pin marks whose heights are adjusted according to the level of the rating of the facility are displayed at the corresponding locations of the facilities on the map when viewed from the above-described diagonal direction. The facility pin marks in the example of FIG. 2 express the difference in height by the length of the leg part.

The level of the rating of each facility is clear based on the difference in height of each facility pin mark displayed as shown in FIG. 2. Also, even in the case of facility pin marks 201 and 202 which are located close to each other, any overlap of their head parts can be avoided due to their different heights. Thus, when the user wants to pop-up display detailed facility information regarding either one of the facility pin marks 201 and 202, the user can easily select one of the facility pin marks by operating the operation unit 30.

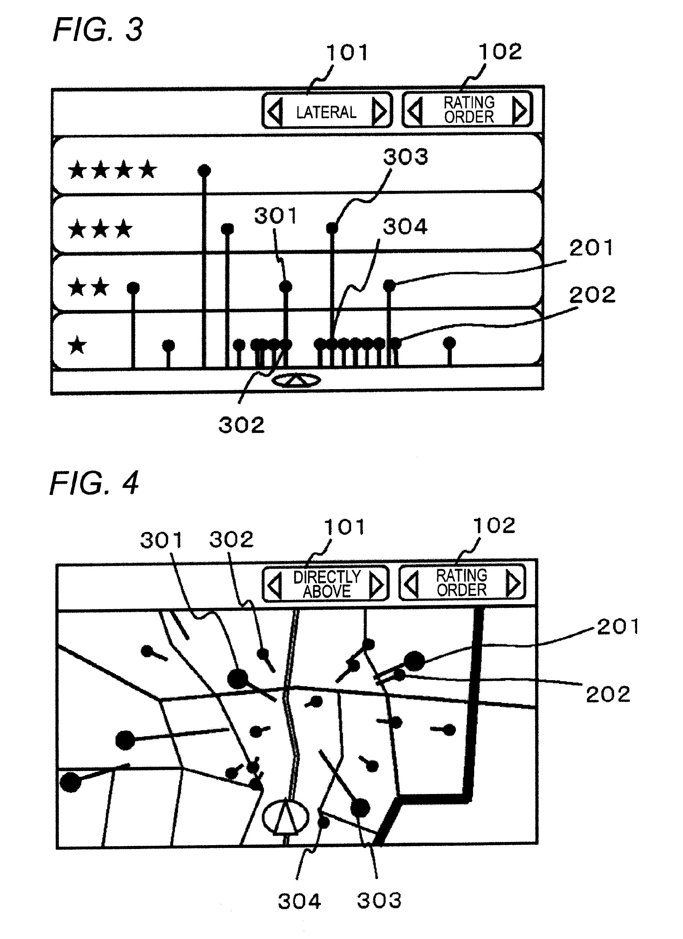

FIG. 3 illustrates a state in which the virtual viewpoint is set to the vehicle's location from an angle at a height that is approximately the same as that of the driver, and a map when looking laterally from the virtual viewpoint in a form visualizing the direction of travel of the vehicle is displayed. Further, a plurality of facility pin marks whose heights are adjusted according to the level of the rating of the facility are displayed on the map when viewed from the above-described lateral direction. The facility pin marks in the example of FIG. 3 express the difference in height by the length of the leg part.

Even if the map is displayed from the lateral direction as in FIG. 3, the level of the rating of each facility is clear based on the difference in height of each facility pin mark that is displayed. Also, even in the cases of facility pin marks 201 and 202 which are located close to each other and facility pin marks 301 and 302 or 303 and 304 which are not close to each other but are in the same direction, any overlap of their head parts can be avoided due to their different heights. Thus, when the user wants to pop-up display detailed facility information regarding one of the facility pin marks 201, 202, 301, 302, 303, and 304, the user can easily select one of the facility pin marks by operating the operation unit 30.

FIG. 4 illustrates a state in which the virtual viewpoint is set to a location in the air directly above, and a map when looking downward from the virtual viewpoint in a form visualizing the directly downward direction is displayed. Further, a plurality of facility pin marks whose heights are adjusted according to the level of the rating of the facility are displayed at the corresponding locations of the facilities on the map when viewed from directly above as described above. The facility pin marks in the example of FIG. 4 express the difference in height by the length of the leg part and the size of the head part. Specifically, the display control unit 2 displays such that the facility marks spread out radially centered on a center location of the map screen displaying the map.

Even when the map is displayed from directly above and the facility pin marks are displayed such that they spread out radially as in FIG. 4, the level of the rating of each facility is clear based on the difference in height of each facility pin mark that is displayed. Also, even in the case of facility pin marks 201 and 202 which are located close to each other, any overlap of their head parts can be avoided due to their different heights. Thus, when the user wants to pop-up display detailed facility information regarding either one of the facility pin marks 201 and 202, the user can easily select one of the facility pin marks by operating the operation unit 30.

Furthermore, according to the display example of FIG. 4, facility pin marks that are taller appear to protrude forward, and thus are easily spotted by the user and are easy to touch. In other words, facility pin marks whose facility rating level is high and are likely to be selected by the user are displayed in a state in which they can be more easily selected. Also, when viewing diagonally or laterally as shown in FIGS. 2 and 3, cases in which the locations of the facility pin marks overlap each other in the front-back direction of the screen, such as the facility pin marks 301 and 302 or 303 and 304, may occur. In contrast, if the facility pin marks are displayed radially when viewing from directly above as in FIG. 4, the user can look over all of the facility pin marks evenly while also comparing the heights of the facility pin marks.

When the map information is displayed in a state when viewed diagonally or laterally as shown in FIGS. 2 and 3, if two facility pin marks which are located near each other are also the same height, overlap between them may not be able to be avoided, and it may become difficult to select one of the two. Also, even if there is no overlap of the head parts of the two facility pin marks, there may be cases in which it is difficult to understand the location of the facility pin marks due to overlap of the leg parts.

In the present embodiment, even in a case in which overlap of the facility pin marks occurs as described above, such overlap can still be avoided. The settings modification unit 4 modifies the location and direction of the virtual viewpoint by rotating the map in a clockwise or counter-clockwise direction in accordance with an operation on the operation unit 30 by the user that has been accepted by the operation accepting unit 3, and stores the information regarding the virtual viewpoint in the virtual viewpoint storage unit 5. The display control unit 2 then displays the map information in accordance with the information regarding the virtual viewpoint that was stored in the virtual viewpoint storage unit 5.

Herein, for example, when the operation unit 30 is a touch panel, the map can be rotated by an operation of swiping the touch panel in the left-right direction. For example, when rotating the map clockwise, an operation of swiping the touch panel in a direction from right to left is performed. Conversely, when rotating the map counter-clockwise, an operation of swiping the touch panel in a direction from left to right is performed. Also, when the operation unit 30 is an input device such as a keyboard or mouse, the map can be rotated by operating a left-right cursor key of the keyboard, or the map can be rotated by displaying a button for rotating on the screen and operating this button with the mouse.

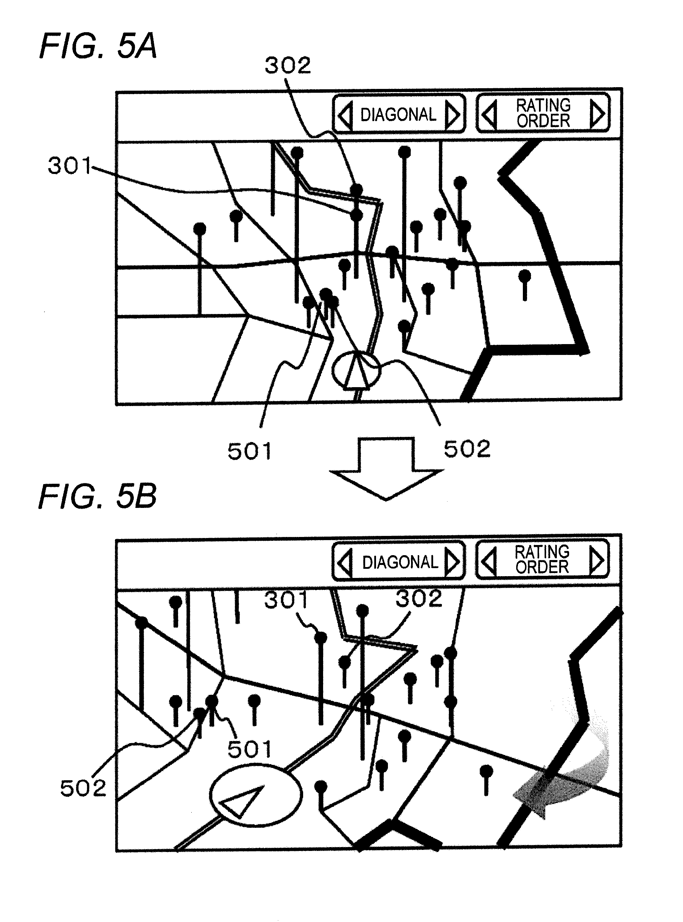

FIG. 5A illustrates a state in which facility pin marks 501 and 502 which are located near each other and have the same height are overlapping at their head parts when the map information is displayed in a state when viewing from diagonally above. In contrast, FIG. 5B illustrates a state in which the map information is displayed upon modifying the location and direction of the virtual viewpoint by rotating the map clockwise around the center of the display screen without changing the angle of the map. By rotating the map in this way, the overlap between the facility pin marks 501 and 502 can be avoided.

FIG. 5A also illustrates a state in which facility pin marks 301 and 302 which are located overlapping in the front-back direction of the screen have different heights and do not overlap at their head parts but do overlap at their leg parts. In this case, it cannot be understood at first glance which of the facility pin marks 301 and 302 is located in front and which is located behind. In contrast, by rotating the map clockwise as shown in FIG. 5B, the overlap at the leg parts of the facility pin marks 301 and 302 can be avoided. Thereby, it becomes clear that the facility pin mark 301 which is taller is located in front and the facility pin mark 302 which is shorter is located behind.

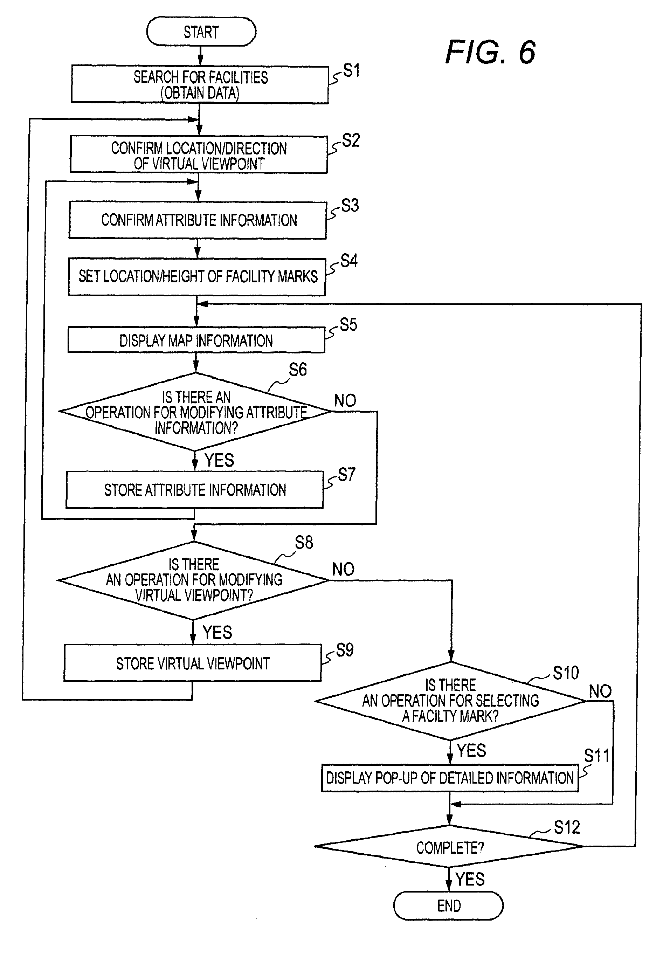

FIG. 6 is a flow chart illustrating an example of the operation of the map information display device 10 according to the present embodiment constituted as described above. The flow chart shown in FIG. 6 begins when a facility search is instructed by the user. First, the data obtaining unit 1 executes a search of the map data storage unit 21 and the facility data storage unit 22 based on a keyword input according to an operation by the user, and obtains facility data that matches the keyword and map data of a predetermined range (step S1).

Next, the display control unit 2 confirms the information of the virtual viewpoint stored in the virtual viewpoint storage unit 5 (step S2), and confirms the attribute information stored in the selected attribute storage unit 6 (step S3). The display control unit 2 then sets a location and height of each facility pin mark to be displayed on the map for the facilities represented by the facility data obtained by the data obtaining unit 1 based on the above-mentioned confirmed information (step S4). Next, the display control unit 2 displays a map when viewed from the virtual viewpoint on the display unit 40, and displays the facility pin marks whose heights have been adjusted at their corresponding locations on the map (step S5).

Subsequently, the operation accepting unit 3 determines whether an operation for modifying the attribute information, or in other words an operation of the attribute information selection button 102, has been executed (step S6). Herein, if an operation of the attribute information selection button 102 has been accepted by the operation accepting unit 3, the settings modification unit 4 stores the attribute information that was set according to the operation in the selected attribute storage unit 6 (step S7). The process then returns to step S3.

On the other hand, if an operation of the attribute information selection button 102 has not been accepted by the operation accepting unit 3, the operation accepting unit 3 further determines whether an operation for modifying the virtual viewpoint, or in other words an operation of the virtual viewpoint selection button 101 or a swiping operation in the left-right direction on the touch panel or the like, has been executed (step S8). Herein, if an operation for modifying the virtual viewpoint has been accepted by the operation accepting unit 3, the settings modification unit 4 stores the information regarding the virtual viewpoint that was set according to the operation in the virtual viewpoint storage unit 5 (step S9). The process then returns to step S2.

Further, if an operation for modifying the virtual viewpoint has not been accepted by the operation accepting unit 3, the operation accepting unit 3 further determines whether an operation for selecting one of the facility pin marks displayed on the screen has been executed (step S10). Herein, if an operation for selecting one of the facility pin marks has been accepted by the operation accepting unit 3, the display control unit 2 pop-up displays detailed information of the facility including address, telephone number, facility usage fee, available time, link to a details page, reviews or applause ("likes"), ratings of the facility by a third party, and the like on the map based on the facility data corresponding to the selected facility pin mark (step S11).

On the other hand, if an operation for selecting one of the facility pin marks has not been accepted by the operation accepting unit 3, the operation accepting unit 3 determines whether an operation for completing the display of the map information has been accepted (step S12). The same determination is made after carrying out the processing of step S11 as well. Herein, if an operation for completing the display has not been accepted, the process returns to step S5. On the other hand, if an operation for completing the display has been accepted by the operation accepting unit 3, the process of the flow chart shown in FIG. 6 ends.

As explained in detail above, in the present embodiment, when displaying a map visualized from a virtual viewpoint set at a predetermined location and displaying facility marks at their corresponding locations on the map, each facility mark is displayed on the map upon adjusting its height from the ground according to a level expressed by attribute information that is included in the facility data.

According to the present embodiment constituted as described above, even without selecting a facility mark displayed on the map to pop-up display detailed information thereof, the user can confirm and compare the level of the attribute information regarding each facility based on the difference in height of each facility mark in a state in which a plurality of the facility marks are displayed on the map. Further, according to the present embodiment, even if there are a plurality of facility marks displayed at the same location or nearby locations on the map, the height of each facility mark that is displayed will change as long as the level expressed by the attribute information regarding each facility is different, and thus overlap of the facility marks can be avoided. Therefore, the user can easily select a desired facility mark to confirm the detailed information thereof. Thereby, the effort required of the user to search for a desired facility among the facility marks displayed on the map can be greatly reduced.

In the above-described embodiment, the three patterns of diagonal, lateral, and directly above were prepared as a location (angle) of the virtual viewpoint, and one of these patterns was selected by operating the virtual viewpoint selection button 101. However, the present invention is not limited thereto. For example, the angle of the virtual viewpoint can also be seamlessly modified by an operation of swiping the touch panel in the up-down direction, an operation of pushing down an up-down cursor key of the keyboard, an operation of pushing down an up-down direction scroll button displayed on the screen, and the like.

Also, in the above-described embodiment, the facility marks were formed by facility pin marks consisting of a leg part and a head part, and the leg part was shaped like a long, thin rod and the head part was shaped like a circle or a sphere. However, the present invention is not limited thereto. For example, even if the facility marks are in the shape of a pin mark, the shape of the leg part can be an inverse triangle whose apex is on the ground side or any other shape. Also, the shape of the head part can be a cube or any other shape. Further, the facility marks are not limited to the shape of a pin mark, and any shape can be used as the facility marks as long as the height can be expressed.

Further, in the above-described embodiment, the rating of the facility, the number of reviews about the facility, and the facility usage fee were discussed as examples of the attribute information that serves as a judgment standard for determining the height of each facility mark. However, the present invention is not limited thereto. For example, any other information can be used as long as it is attribute information that can be quantified and compared.

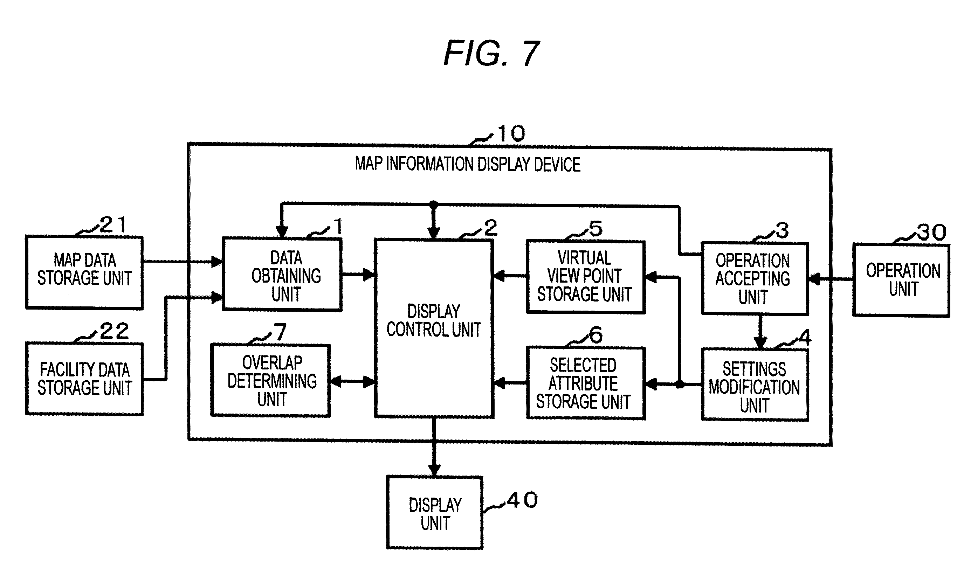

In addition, in the above-described embodiment, considering a case in which overlap of the facility marks occurred even upon displaying the facility marks by changing their heights, the location and direction of the virtual viewpoint could be changed by rotating the map according to an operation by the user. However, this can be carried out automatically as well. For example, as shown in FIG. 7, the map information display device 10 can further include an overlap determining unit 7 that determines whether there is any overlap between the facility marks displayed by the display control unit 2. If the overlap determining unit 7 determines that overlap exists, the display control unit 2 displays the map information upon automatically modifying at least one of the location and direction of the virtual viewpoint so as to eliminate the overlap.

Herein, with regard to overlap of the facility marks, it can be determined whether overlap between the head parts of facility pin marks exists. Also, the location and direction of the virtual viewpoint can be modified in order to avoid overlap by rotating the map, or by modifying the angle, or by doing both.

In addition, all of the above-described embodiments are merely specific examples for carrying out the present invention, and the technical scope of the present invention should not be construed as limited to the above embodiments. In other words, the present invention can be carried out in various forms without departing from the spirit or essential features of the invention.

### Reference Signs List

- 1: data obtaining unit
- 2: display control unit
- 3: operation accepting unit
- 4: settings modification unit
- 5: virtual viewpoint storage unit
- 6: selected attribute storage unit
- 7: overlap determining unit
- 10: map information display device
- 21: map data storage unit
- 22: facility data storage unit
- 30: operation unit
- 40: display unit

## Claims

1. A map information display device (10) comprising:
a data obtaining unit that is configured to obtain map data and facility data including location information of facilities on a map; and
a display control unit (2) that is configured to display a map visualized from a virtual viewpoint located above a ground based on the map data and to display facility marks that represent the existence of the facilities at corresponding locations on the map based on the location information, **characterized in that**
the facility data further includes attribute information of the facilities, and
the display control unit (2) is configured to display the facility marks upon adjusting a height from the ground of each facility mark according to a level expressed by the attribute information.

2. The map information display device (10) according to claim 1, **characterized in that**
the map information display device (10) further comprises an operation accepting unit (3) that is configured to accept an operation by a user, and
the display control unit (2) is configured to display the map and the facility marks upon modifying at least one of a location and a direction of the virtual viewpoint in accordance with an operation by the user that has been accepted by the operation accepting unit (3).

3. The map information display device (10) according to claim 1 or 2, **characterized in that**
when the direction of the virtual viewpoint is set as a direction visualizing the ground from directly above, the display control unit (2) is configured to display such
that the facility marks spread out radially centered on a center location of a map screen that displays the map.

4. The map information display device (10) according to one of claims 1-3, **characterized in that**
the display control unit (2) is configured to use pin marks having a head part of a predetermined shape on top of a leg part of a predetermined shape that extends from the ground as the facility marks, and the difference in height of each pin mark is expressed by at least a length of the leg part.

5. The map information display device (10) according to one of claims 1-4, **characterized in that**
the display control unit (2) is configured to use pin marks having a head part of a predetermined shape on top of a leg part of a predetermined shape that extends from the ground as the facility marks, and the difference in height of each pin mark is expressed by a length of the leg part and a size of the head part.

6. The map information display device (10) according to one of claims 1-5, **characterized in that**
the map information display device (10) further comprises an operation accepting unit (3) that is configured to accept an operation by a user, and
the data obtaining unit is configured to execute a search based on a keyword input in accordance with an operation by the user that has been accepted by the operation accepting unit (3), and to obtain facility data that matches the keyword and map data of a predetermined range.

7. The map information display device (10) according to one of claims 1-6, **characterized in that**
the attribute information included in the facility data is one of a rating of the facility, a number of reviews about the facility, or a facility usage fee.

8. The map information display device (10) according to one of claims 1-7, **characterized in that**
the attribute information included in the facility data includes a rating of the facility, a number of reviews about the facility, and a facility usage fee,
the map information display device (10) further comprises an operation accepting unit (3) that is configured to accept an operation by a user,
the attribute information can be selected in accordance with an operation by the user that has been accepted by the operation accepting unit (3), and
the display control unit (2) is configured to display the facility marks upon adjusting the height of each facility mark from the ground according to a level expressed by the attribute information that was selected in accordance with the operation by the user.

9. The map information display device (10) according to one of claims 1-8, **characterized in that**
the map information display device (10) further comprises an overlap determining unit that is configured to determine whether there is any overlap between the facility marks displayed by the display control unit (2), and
when the overlap determining unit has determined that there is an overlap, the display control unit (2) is configured to display the map and the facility marks upon automatically modifying one of a location and a direction of the virtual viewpoint so as to eliminate the overlap.

10. A method for displaying map information comprising:
a first step in which a data obtaining unit of a map information display device (10) obtains map data and facility data including location information of facilities on a map; and
a second step in which a display control unit (2) of the map information display device (10) displays a map visualized from a virtual viewpoint located above a ground based on the map data and displays facility marks that represent the existence of the facilities at corresponding locations on the map based on the location information, **characterized in that**
the facility data further includes attribute information of the facilities, and
the display control unit (2) displays the facility marks upon adjusting a height from the ground of each facility mark according to a level expressed by the attribute information.
